# EUROPÄISCHE PATENTSCHRIFT

(11) **EP 3 347 661 B1**
(45) Veröffentlichungstag und Bekanntmachung des Hinweises auf die Patenterteilung: **04.11.2020**
(21) Anmeldenummer: 16766864.9
(22) Anmeldetag: 31.08.2016
(51) Int. Cl.: H05B 3/14, H05B 3/62, F27B 17/02, F27D 5/00, F27D 11/04, F27D 99/00, G01N 21/31, G01N 21/74, H05B 3/06

(54) **HEIZKAMMER, HEIZOFEN, ANALYSEVORRICHTUNG SOWIE VERFAHREN ZUM ANALYSIEREN VON FREMDSTOFFGEHALTEN IN PROBEN**
HEATING CHAMBER, HEATING FURNACE, ANALYSIS DEVICE, AND METHOD FOR ANALYZING FOREIGN-SUBSTANCE CONTENTS IN SAMPLES
CHAMBRE DE CHAUFFAGE, FOUR DE CHAUFFAGE, DISPOSITIF D'ANALYSE ET PROCÉDÉ D'ANALYSE DE TENEURS EN SUBSTANCES ÉTRANGÈRES DANS DES ÉCHANTILLONS

(30) Priorität: 11.09.2015 DE 102015115355
(43) Veröffentlichungstag der Anmeldung: 18.07.2018
(73) Patentinhaber: Schunk Kohlenstofftechnik GmbH, 35452 Heuchelheim (DE)
(72) Erfinder: METZ, Joachim, 35683 Dillenburg (DE); GÄRTNER, Ralf, 35633 Lahnau (DE); DOBROTKA, Simon, 35576 Wetzlar (DE)
(74) Vertreter: Qip Patentanwälte Dr. Kuehn & Partner mbB
(86) Internationale Anmeldenummer: PCT/EP2016/070484
(87) Internationale Veröffentlichungsnummer: WO 2017/042067

(56) Entgegenhaltungen:
- DE-A1- 19 837 831

## Beschreibung

### GEBIET DER ERFINDUNG

Die vorliegende Erfindung betrifft eine Heizkammer für einen Heizofen, wie er in einer Analysevorrichtung zum Analysieren von Fremdstoffgehalten in Proben eingesetzt werden kann.

### HINTERGRUND DER ERFINDUNG

Zum Analysieren von Fremdstoffgehalten in Proben hat sich eine sogenannte Feststoffprobenaufgabe in Form einer elektrothermischen Verdampfung (ETV) als eine moderne und sehr zukunftsträchtige Variante zur Vorbereitung von Analysenproben für eine spektrometrische Analyse sowie zur Einführung dieser Proben in entsprechende Analysegeräte herausgestellt, da sie häufig eine Erzielung sehr geringer Nachweisgrenzen ermöglicht.

Beispielsweise kann eine Analyse von Kohlenstoffmaterialien mittels elektrothermischer Verdampfung, gekoppelt mit einem optischen Emissionsspektrometer, welches als Anregungsquelle ein Plasma verwendet (kurz häufig als ETV-ICP/OES bezeichnet), als eine bewährte Methode zum Bestimmen eines Gehalts an Fremdatomen in zum Beispiel hochreinen Graphiten mit einem Grad an Verunreinigungen von unter 1 ppm eingesetzt werden. Hierbei wird die Probe in einem Heizofen mit beispielsweise Argon als Trägergas auf bis zu 3000°C aufgeheizt und Verunreinigungen, meist in Form hoch refraktärer Verbindungen, mithilfe von Reaktionsgasen, die mit den vorliegenden Verunreinigungen zu flüchtigen Substanzen reagieren, in eine Gasphase überführt. Das Trägergas mit den zum Beispiel Fremdatomhalogenid-haltigen Dämpfen wird anschließend in einem Hüllgasstrom-Verfahren in ein Aerosol überführt. Durch eine solche direkte Feststoffaufgabe können Verunreinigungen unmittelbar in ein nachgeschaltetes Plasma eines Spektrometers geleitet werden. Ein entstehendes transientes Spektrometersignal kann dann aufgezeichnet und ausgewertet werden.

Diese spezielle Kombination von Probenaufgabe und Analysetechnik kann sehr niedrige Nachweisgrenzen im unteren bis mittleren ppt-Bereich (d.h. "parts per trillion", entsprechend [ng/kg]) erreichen. Durch eine Analysendauer von wenigen Minuten pro Probe und in Verbindung mit beispielsweise einem Autosampler kann diese Methode gleichzeitig einen hohen Grad an Ökonomie im Labor bieten.

Die mit der genannten Methode zu messenden Proben können aus einem Veredelungsverfahren der Hochtemperatur-Gasreinigung stammen. Dieser letzte Schritt kann auf den gleichen Grundsätzen wie die Feststoffprobenaufgabe mittels ETV basieren. Um nun aber über einen Erfolg dieses Prozessschrittes der Hochtemperaturreinigung eine klare Aussage treffen zu können, kann es essenziell sein, sowohl das Niveau der Verunreinigungen der Edukte (in diesen Fall der ungereinigten Graphite) als auch dasjenige der Produkte (in diesem Fall der gereinigten Graphite) zu kennen. Da der Gehalt an Fremdatomen im Ausgangsmaterial im mittleren bis oberen ppm-Bereich liegen kann, besteht bei einer ETVbasierten Analyse dieser Proben eine erhöhte Gefahr der Elementverschleppung in den folgenden Analysenlauf (sogenannter Memoryeffekt).

Aufgrund des niedrigen Niveaus der Gesamtverunreinigungen im Produkt (der Gesamtgehalt aller Fremdatome in gereinigten Graphiten beträgt typischerweise ca. 1 ppm) ist in diesem Fall eine niedrige Nachweisgrenze der Einzelelemente wünschenswert.

Es ist daher anzustreben, eine Empfindlichkeit von zum Analysieren von Fremdstoffgehalten in Proben eingesetzten Analysevorrichtungen bzw. - verfahren, wie z.B. in der DE 198 37 831 A1 beschrieben, zu steigern.

Es wurde erkannt, dass unter anderem Hardwarekomponenten einer für die genannte Analysemethode eingesetzten Analysevorrichtung einen entscheidenden Einfluss bei einer Optimierung der Empfindlichkeit der Analysemethode haben können.

### ZUSAMMENFASSUNG DER ERFINDUNG UND VORTEILHAFTER AUSFÜHRUNGSFORMEN

Es wurde somit erkannt, dass ein Bedarf an einer Heizkammer für einen Heizofen bestehen kann, welche hinsichtlich ihrer Eigenschaften bei einer Durchführung einer elektrothermischen Verdampfung im Vergleich zu herkömmlichen Heizkammern verbessert wurde und so einen Beitrag zu einer Steigerung der Empfindlichkeit und/oder zu einer Minimierung des Memoryeffektes der eingangs genannten Analysemethode leisten kann. Ferner kann ein Bedarf an einer Heizkammer bestehen, welche möglichst langlebig ist, um auf diese Weise unter anderem Kosten bei der Durchführung der eingangs genannten Analysemethode gering zu halten. Ferner kann ein Bedarf an einem Heizofen, einer Analysevorrichtung sowie einem Verfahren zum Analysieren von Fremdstoffgehalten in Proben bestehen, bei denen die erfindungsgemäße Heizkammer eingesetzt wird. Einem solchen Bedarf kann mit dem Gegenstand eines der unabhängigen Ansprüche entsprochen werden. Vorteilhafte Ausführungsformen sind in den abhängigen Ansprüchen sowie in der nachfolgenden Beschreibung dargelegt.

Gemäß einem Aspekt der Erfindung wird eine Heizkammer für einen Heizofen vorgeschlagen, welche eine elektrisch leitfähige Wandung, einen Probenaufnahmebereich, einen Düsenbereich, einen ersten Elektroanschlussbereich und einen zweiten Elektroanschlussbereich aufweist. Der Probenaufnahmebereich und der Düsenbereich sind jeweils von der Wandung umgeben. Der Probenaufnahmebereich und der Düsenbereich sind entlang einer zentral verlaufenden Längsachse hintereinander angeordnet und in Fluidkommunikation miteinander ausgebildet. Der Probenaufnahmebereich weist eine größere Querschnittsfläche auf als der Düsenbereich. Der erste und der zweite Elektroanschlussbereich sind bezogen auf die Längsachse der Heizkammer angrenzend an entgegengesetzte Enden der Heizkammer angeordnet und elektrisch mit der Wandung verbunden. Die Heizkammer ist dabei derart ausgebildet, dass ein durch Anlegen einer elektrischen Spannung an den ersten und zweiten Elektroanschlussbereich bewirkter elektrischer Strom derart durch die Wandung fließt, dass eine durch ihn bewirkte Heizleistung in dem Düsenbereich gleich oder höher ist als in dem Probenaufnahmebereich.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Wie weiter unten im Zusammenhang mit der Beschreibung bevorzugter Ausführungsformen im Detail dargelegt werden wird, wurde beobachtet, dass Eigenschaften der in einem Heizofen eingesetzten Heizkammer bei einer Verwendung des Heizofens für eine elektrothermische Verdampfung und einer nachfolgenden Analyse von dabei verdampften Fremdstoffgehalten in einer Probe Einfluss darauf nehmen können, mit welcher Genauigkeit bzw. Empfindlichkeit Fremdstoffgehalte ermittelt und analysiert werden können. Ferner wurde beobachtet, dass es bei herkömmlich verwendeten Heizkammern zu einer beschränkten Lebensdauer der Heizkammern kommen kann.

Als eine wesentliche Eigenschaft der hierbei eingesetzten Heizkammer, die die Analyseempfindlichkeit und/oder die Lebensdauer der Heizkammer beeinflussen kann, wurde nun die Temperaturverteilung innerhalb der Heizkammer erkannt.

Kurz zusammengefasst wurde unter anderem beobachtet, dass bei herkömmlich verwendeten Heizkammern eine in einem Probenaufnahmebereich eingebrachte Probe schneller und auf höhere Temperaturen erhitzt wird als der Düsenbereich der Heizkammer, und dass dies sich negativ bei einer nachfolgenden Analyse der aus der Probe thermisch freigesetzten Fremdstoffgehalte auswirken kann und/oder eine Verkürzung der Lebensdauer der Heizkammer bewirken kann.

In diesem Zusammenhang wurde herausgefunden, die Heizkammer derart auszugestalten, dass ein zum Heizen der Heizkammer eingesetzter elektrischer Strom, der durch die verschiedenen Bereiche der Heizkammer fließt und dort aufgrund elektrischer Widerstände eine Umsetzung von elektrischer Leistung in Heizleistung bewirkt, derart durch die verschiedenen Bereiche der Heizkammer fließt, dass er in dem Düsenbereich eine gleiche oder höhere Heizleistung bewirkt als in dem Probenaufnahmebereich. Dadurch kann erreicht werden, dass sich der Düsenbereich vorzugsweise schneller und/oder auf höhere Temperaturen erhitzt als der Probenaufnahmebereich.

Um eine solche gezielt lokal innerhalb der Heizkammer bewirkte Heizleistung zu erreichen, ist der erste und der zweite Elektroanschlussbereich in radialer Richtung entfernter zu der zentral verlaufenden Längsachse durch die Heizkammer angeordnet sein als ein den Düsenbereich umgebender Teil der Wandung der Heizkammer. Dabei soll die Heizkammer vorzugsweise derart ausgebildet sein, dass der bewirkte elektrische Strom zwischen dem ersten und dem zweiten Elektroanschlussbereich überwiegend, das heißt zu vorzugsweise mehr als 50%, stärker bevorzugt mehr als 75%, radial nach innen hin zu dem den Düsenbereich umgebenden Teil der Wandung geleitet wird.

Mit anderen Worten kann sich gemäß dieser Ausführungsform ein den im Querschnitt engeren Düsenbereich umgebender Teil der Wandung der Heizkammer näher bei der zentral verlaufenden Längsachse durch die Heizkammer erstrecken als derjenige Teil der Wandung im ersten und zweiten Elektroanschlussbereich. Noch einmal anders ausgedrückt sind der erste und der zweite Elektroanschlussbereich von der zentralen Längsachse radial weiter beabstandet als der den Düsenbereich umgebende Teil der Wandung.

Die Heizkammer ist dabei nun beispielsweise aufgrund ihrer geometrischen Ausgestaltung dazu ausgebildet, dass ein zwischen den zwei Elektroanschlussbereichen bewirkter elektrischer Strom zumindest überwiegend durch den näher der Längsachse liegenden den Düsenbereich umgebenden Teil der Wandung fließt, das heißt von einem der Elektroanschlussbereiche kommend nach radial innen hin zu der zentralen Längsachse umgelenkt wird, und allenfalls ein im Vergleich hierzu geringerer Anteil des gesamten bewirkten Stroms zwischen den beiden Elektroanschlussbereichen entlang Strompfaden fließt, die von der zentralen Längsachse gleich weit oder sogar weiter radial beabstandet sind als die beiden Elektroanschlussbereiche.

Insgesamt kann ein durch die Geometrie der Heizkammer bedingter, die Heizleistung verursachender Stromfluss somit im Düsenbereich in radialer Richtung näher zu der zentral verlaufenden Längsachse geführt werden als im übrigen Heizkammerbereich, insbesondere als im Probenaufnahmebereich.

Dadurch, dass der zum Heizen eingesetzte Strom zu einem überwiegenden Anteil radial nach innen hin zu dem den Düsenbereich umgebenden Teil der Wandung umgeleitet wird, können regelmäßig zwei Effekte bewirkt werden. Einerseits wird die von dem durchfließenden elektrischen Strom bewirkte Heizleistung sehr nahe zu dem Düsenbereich erzeugt, so dass eine den Düsenbereich umgebende Oberfläche der Wandung schnell und effizient erhitzt wird. Andererseits steht dem durchfließenden Strom zum Durchfließen eine vorzugsweise geringere Querschnittsfläche innerhalb der Wandung zur Verfügung, so dass sich lokal angrenzend an den Düsenbereich eine höhere Stromdichte, und damit zusammenhängend eine höhere Umwandlung von elektrischen Leistungsverlusten in thermische Leistung, einstellt als in beispielsweise in radialer Richtung weiter von der Längsachse beabstandeten Teilen der Wandung, welche den Probenaufnahmebereich umgeben.

Gemäß einer Ausführungsform weist die Wandung der Heizkammer in einem verengten Teilbereich, in dem die Wandung den Düsenbereich umgibt, im Vergleich zu Bereichen, in denen die Wandung den Probenaufnahmebereich umgibt, eine verengte Querschnittsgeometrie auf.

Mit anderen Worten soll gemäß dieser Ausführungsform die Wandung der Heizkammer dort, wo sie den Düsenbereich umgibt, eine verengte Querschnittsgeometrie, das heißt eine verringerte Querschnittsfläche, gemessen in einer Ebene quer zur Längsachse der Heizkammer, aufweisen, verglichen mit Bereichen, wo die Wandung den Probenaufnahmebereich umgibt. In dem verengten Teilbereich ist somit eine nach radial außen gerichtete Oberfläche der Wandung durchschnittlich weniger weit von der zentralen Längsachse entfernt als in den nicht-verengten Teilbereichen, in denen die Wandung den Probenaufnahmebereich umgibt.

Einerseits führt eine solche lokal verengte Querschnittsgeometrie der Wandung angrenzend an den Düsenbereich dazu, dass ein zwischen den Elektroanschlussbereichen fließender elektrischer Strom nahe an dem radial innen liegenden, engen Düsenbereich entlangströmen und dort seine Heizleistung erzeugen muss. Andererseits kann die lokale Verengung der Wandung, ähnlich einer lokalen Einschnürung, dafür sorgen, dass der zwischen den Elektroanschlussbereichen fließende Strom durch einen kleineren Querschnitt fließen muss und sich somit eine höhere Stromdichte ergibt, was wiederum eine erhöhte Heizleistung bewirkt. Insgesamt wird somit der Düsenbereich stärker geheizt als der Probenaufnahmebereich.

Gemäß einer Ausführungsform weist die Heizkammer in dem verengten Teilbereich Stegbereiche auf, welche den verengten Teilbereich überbrücken, um eine mechanisch belastbare, vorzugsweise lineare Verbindung zwischen den entgegengesetzten Enden der Heizkammer zu bilden.

Anders ausgedrückt kann der verengte, radial an den Düsenbereich angrenzende Teilbereich zwar insgesamt eine verengte Querschnittsgeometrie aufweisen, trotz verringerter Querschnittsfläche jedoch auch Stegbereiche aufweisen, die als mechanische Stütze zwischen nicht-verengten Teilbereichen in Richtung der Längsachse vor und hinter dem verengten Teilbereich dienen können. Die Stegbereiche können somit eine lokale Einschnürung der Wandung in dem verengten Teilbereich zumindest an einigen Stellen überbrücken, so dass beispielsweise auf die Wandung wirkende mechanische Kräfte, insbesondere mechanische Kräfte, die weitgehend parallel zu der Längsachse wirken, in dem verengten Teilbereich über die Stegbereiche abgeleitet werden können und somit hin zu den entgegengesetzten Enden der Heizkammer übertragen werden können. Die Stegbereiche erstrecken sich und überbrücken den verengten Teilbereich dabei im Wesentlichen in Richtungen parallel zu der Längsachse der Heizkammer, so dass zwischen den entgegengesetzten Enden der Heizkammer eine mechanisch belastbare lineare Verbindung über die Stegbereiche hinweg entsteht.

Gemäß einer Ausführungsform weist die Heizkammer mehrere äquidistant entlang eines Umfangs des verengten Teilbereichs verteilte Stegbereiche auf. Beispielsweise können wenigstens zwei einander bezüglich der Längsachse gegenüberliegende Stegbereiche, vorzugsweise jedoch wenigstens drei oder vier oder mehr gleichmäßig über den Umfang des verengten Teilbereichs vorgesehene Stegbereiche vorgesehen sein. Auf diese Weise können insbesondere zwischen den entgegengesetzten Enden der Heizkammer wirkende mechanische Kräfte gleichmäßig verteilt über den Umfang der Wandung der Heizkammer und die darin integrierten Stegbereiche abgeleitet werden.

Gemäß einer Ausführungsform werden der erste und der zweite Elektroanschlussbereich durch Stirnflächen der Wandung an entgegengesetzten Enden der Heizkammer gebildet. Dabei weisen der erste und der zweite Elektroanschlussbereich eine im Wesentlichen gleiche Querschnittsgeometrie auf.

Mit anderen Worten können die beiden Elektroanschlussbereiche an der Heizkammer im Wesentlichen gleich oder ähnlich ausgebildet sein und durch quer zur Längsachse verlaufende Stirnflächen der Wandung an den entgegengesetzten Enden der Heizkammer gebildet sein. Eine derart ausgebildete Heizkammer kann in einfacher Weise zwischen zwei flächige, parallel zueinander angeordnete elektrische Kontakte, beispielsweise in Form planer Elektroden, zwischengelagert werden, so dass von den elektrischen Kontakten über die gesamten als Anschlussbereiche dienenden Stirnflächen der Wandung eine elektrische Spannung an die elektrisch leitfähige Wandung angelegt werden kann und somit ein elektrischer Stromfluss großflächig durch die gesamte Wandung bewirkt werden kann.

Gemäß einer Ausführungsform sind der Probenaufnahmebereich und/oder der Düsenbereich bezogen auf die zentral verlaufende Längsachse achssymmetrisch, vorzugsweise rotationssymmetrisch, ausgebildet.

Mit anderen Worten ist eine Innenoberfläche der den Probenaufnahmebereich und den Düsenbereich umgebenden Wandung bezogen auf die zentral durch diese verlaufende Längsachse achssymmetrisch oder vorzugsweise rotationssymmetrisch ausgestaltet. Einander bezüglich der Längsachse gegenüberliegende Punkte auf dieser Oberfläche sind somit in radialer Richtung jeweils gleich weit von der Längsachse entfernt (Achssymmetrie), wobei dies vorzugsweise für alle Punkte entlang eines Umfangs um die Längsachse gilt (Rotationssymmetrie). Dies trifft vorzugsweise sowohl für den Probenaufnahmebereich als auch für den Düsenbereich zu. Eine achssymmetrische, vorzugsweise rotationssymmetrische, Auslegung dieser beiden Bereiche kann beispielsweise eine vorteilhafte Strömungsverteilung von durch diese Bereiche durchgeleitetem Gas bewirken, was insbesondere bei einem Einsatz als Heizofen für eine Analysevorrichtung vorteilhaft sein kann.

Gemäß einer Ausführungsform ist die Wandung angrenzend an den Probenaufnahmebereich und/oder den Düsenbereich bezogen auf die Längsachse achssymmetrisch, vorzugsweise rotationssymmetrisch, ausgebildet.

Mit anderen Worten kann, im Gegensatz zu der vorangehend erläuterten Ausführungsform, nicht lediglich der Probenaufnahme- und Düsenbereich, das heißt eine zu diesen Bereichen hin gerichtete Innenoberfläche der Wandung, achssymmetrisch bzw. rotationssymmetrisch ausgebildet sein, sondern die gesamte Wandung kann derart symmetrisch ausgebildet sein. Eine derart symmetrisch aufgebaute Wandung kann vorteilhafte physikalische Eigenschaften wie beispielsweise eine hohe und gleichmäßig über den Umfang der Wandung verteilte mechanische Stabilität und/oder eine homogene Verteilung von durch die Wandung durchgeleitetem elektrischen Strom, und damit eine homogene Wärmeerzeugung, mit sich bringen. Die Achs- bzw. Rotationssymmetrie kann für die Wandung sowohl in Teilbereichen angrenzend an den Düsenbereich als auch, ergänzend oder alternativ, in Teilbereichen angrenzend an den Probenaufnahmebereich gelten, wobei beispielsweise Stegbereiche in einem verengten Teilbereich angrenzend an den Düsenbereich zulässige Ausnahmen von einer ansonsten achssymmetrischen oder insbesondere rotationssymmetrischen Ausbildung der Wandung bilden können. Vorteilhaft kann insbesondere bei einer rotationssymmetrischen Ausbildung der einzelne Bereiche der Heizkammer umgebenden Wandung genutzt werden, dass solche rotationssymmetrischen Strukturen einfach hergestellt werden können, beispielsweise durch drehendes Spanen oder Fräsen.

Gemäß einer Ausführungsform ragt der Düsenbereich mit einem radial weit innen liegenden Düsenauslass in axialer Richtung über radial weiter außen liegende Stirnflächen der Wandung über.

Mit anderen Worten kann an der Heizkammer ein Düsenauslass vorgesehen sein, der sich, in radialer Richtung gesehen, nahe der zentralen Längsachse erstreckt, und der, in axialer Richtung gesehen, über radial weiter außen liegende Stirnflächen der Wandung in einer Richtung weg von dem Probenaufnahmebereich absteht. Ein solcher überragender Düsenauslass kann beispielsweise in ein zu der Heizkammer benachbart angeordnetes Rohr oder eine Verbindungsleitung hineinragen, so dass zum Beispiel durch den Düsenauslass austretendes Gas effizient in ein solches Rohr bzw. eine solche Leitung eingeleitet werden kann.

Gemäß einer Ausführungsform besteht zumindest die Wandung der Heizkammer aus Graphit. Vorzugsweise kann die gesamte Heizkammer aus Graphit bestehen. Graphit weist einerseits eine hohe elektrische Leitfähigkeit auf und kann andererseits sehr hohen Temperaturen standhalten, so dass es sich sehr gut für die elektrisch zu beheizende Wandung der Heizkammer eignet. Prinzipiell ist vorstellbar, die Heizkammer ergänzend noch mit anderen, vorzugsweise sehr wärmestabilen Materialien auszubilden, welche nicht notwendigerweise eine hohe elektrische Leitfähigkeit aufweisen müssen. Allerdings erscheint es vorteilhaft, die gesamte Heizkammer aus Graphit auszubilden.

Insbesondere kann es dabei vorteilhaft sein, die gesamte Heizkammer einstückig auszubilden. Beispielsweise kann die Heizkammer aus einem Graphitblock durch Schneiden, Fräsen, Drehen oder andere Bearbeitungstechniken gefertigt werden.

Gemäß einem zweiten Aspekt der vorliegenden Erfindung wird ein Heizofen beschrieben, der eine mechanische Halterung, einen ersten und einen zweiten elektrischen Kontakt sowie eine Heizkammer gemäß einer Ausführungsform des vorangehend beschriebenen ersten Aspekts der Erfindung aufweist. Die Heizkammer ist in der Halterung gehalten und der erste Elektroanschlussbereich der Heizkammer ist mit dem ersten elektrischen Kontakt und der zweite Elektroanschlussbereich der Heizkammer mit dem zweiten elektrischen Kontakt kontaktiert.

Während die mechanische Halterung die Heizkammer in einer gewünschten Position zu halten vermag, können die beiden elektrischen Kontakte dafür sorgen, dass beispielsweise von einer externen elektrischen Spannungsquelle eine elektrische Spannung an die beiden Elektroanschlussbereiche der gehaltenen Heizkammer angelegt werden kann. Die mechanische Halterung und/oder die beiden elektrischen Kontakte sollten dabei derart ausgebildet sein, dass sie, beispielsweise aufgrund der für sie verwendeten Materialien oder einer geometrischen Ausbildung, den hohen an der Heizkammer im Betrieb auftretenden Temperaturen standhalten können.

Vorzugsweise können die mechanische Halterung und die beiden elektrischen Kontakte als gemeinsame Vorrichtung ausgestaltet sein, die sowohl zum mechanischen Halten der Heizkammer als auch zum Einleiten eines elektrischen Stroms in die Wandung der Heizkammer geeignet ausgestaltet ist. Die elektrischen Kontakte können dazu ausgestaltet sein, den zum effizienten Heizen der Wandung der Heizkammer notwendigen hohen elektrischen Strömen von oft mehreren 100 A standzuhalten.

Gemäß einem dritten Aspekt der Erfindung wird eine Analysevorrichtung zum Analysieren von Fremdstoffgehalten in Proben vorgeschlagen. Die Analysevorrichtung umfasst einen Heizofen gemäß einer Ausführungsform des zuvor genannten zweiten Aspekts der Erfindung sowie eine Verbindungsleitung und ein Spektrometer, beispielsweise ein optisches Spektrometer, insbesondere ein optisches Emissionsspektrometer. Der Düsenbereich der Heizkammer des Heizofens mündet dabei derart in die Verbindungsleitung und die Verbindungsleitung mündet wiederum derart in das Spektrometer, dass im Probenaufnahmebereich der Heizkammer gebildetes Gas über den Düsenbereich und die Verbindungsleitung in das Spektrometer geleitet werden kann.

Der prinzipielle Aufbau der vorgeschlagenen Analysevorrichtung entspricht dabei im Wesentlichen demjenigen einer einleitend beschriebenen ETV-ICP/OES. Aufgrund der speziellen Auslegung der Heizkammer des hierbei angesetzten Heizofens, insbesondere aufgrund der darin im Betrieb generierten günstigen Wärmeverteilung in dem Düsenbereich und dem Probenaufnahmebereich, kann in dem Probenaufnahmebereich strömendes Gas, in das bei den generierten hohen Temperaturen Fremdstoffe aus einer darin aufgenommenen Probe übergehen können, effizient durch den Düsenbereich geleitet werden, ohne dass eine Gefahr besteht, dass darin enthaltene Fremdstoffpartikel bzw. Fremdstoffdämpfe an der den Düsenbereich begrenzenden Wandung niederschlagen bzw. kondensieren oder mit dieser in größerem Umfang chemische Verbindungen eingehen. Stattdessen können diese Fremdstoffe effizient in die Verbindungsleitung außerhalb des Heizofens eingeleitet werden und dort beispielsweise mit einem anderen, kühleren Trägergas unter Bildung eines Aerosols in eine Analysekammer des Spektrometers eingeleitet werden, um dort dann spektroskopisch analysiert werden zu können.

Gemäß einem vierten Aspekt der Erfindung wird ein Verfahren zum Analysieren von Fremdstoffgehalten in Proben vorgeschlagen, bei dem die Proben in einem Probenaufnahmebereich einer Heizkammer gemäß einer Ausführungsform des oben genannten ersten Aspekts der Erfindung aufgeheizt werden, um darin enthaltene Fremdstoffgehalte freizusetzen.

Die Verwendung des hierin beschriebenen Heizofens mit der vorteilhaft hinsichtlich ihrer Wärmeverteilung ausgestalteten Heizkammer kann dabei dazu führen, dass aus den Proben austretende Fremdstoffe sehr effizient analysiert werden können, beispielsweise spektroskopisch, und das Verfahren somit eine sehr hohe Empfindlichkeit und Genauigkeit, beispielsweise bis hin zu einem gewünschten ppt-Bereich (d.h. [ng/kg]), erhalten kann.

Es wird darauf hingewiesen, dass mögliche Merkmale und Vorteile von Ausführungsformen der Erfindung hierin teilweise mit Bezug auf eine erfindungsgemäß ausgestaltete Heizkammer, teilweise mit Bezug auf einen erfindungsgemäß ausgestalteten Heizofen, teilweise mit Bezug auf eine erfindungsgemäß ausgestaltete Analysevorrichtung und teilweise mit Bezug auf ein erfindungsgemäß durchgeführtes Analyseverfahren beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt einen Querschnitt durch eine Analysevorrichtung mit einer herkömmlichen Heizkammer.
Fig. 2 zeigt eine perspektivische Ansicht auf eine Heizkammer gemäß einer Ausführungsform der vorliegenden Erfindung.
Fig. 3 zeigt eine Frontansicht auf die Heizkammer aus Fig. 2.
Fig. 4 zeigt eine Seitenansicht auf die Heizkammer aus Fig. 2.
Fig. 5 zeigt eine Schnittansicht entlang der Linie A-A aus Fig. 3 auf die Heizkammer aus Fig. 2.
Fig. 6 zeigt eine Schnittansicht entlang der Linie B-B aus Fig. 4 auf die Heizkammer aus Fig. 2.
Fign. 7 bis 9 zeigen Seitenansichten auf Heizkammern gemäß alternativen Ausführungsformen der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

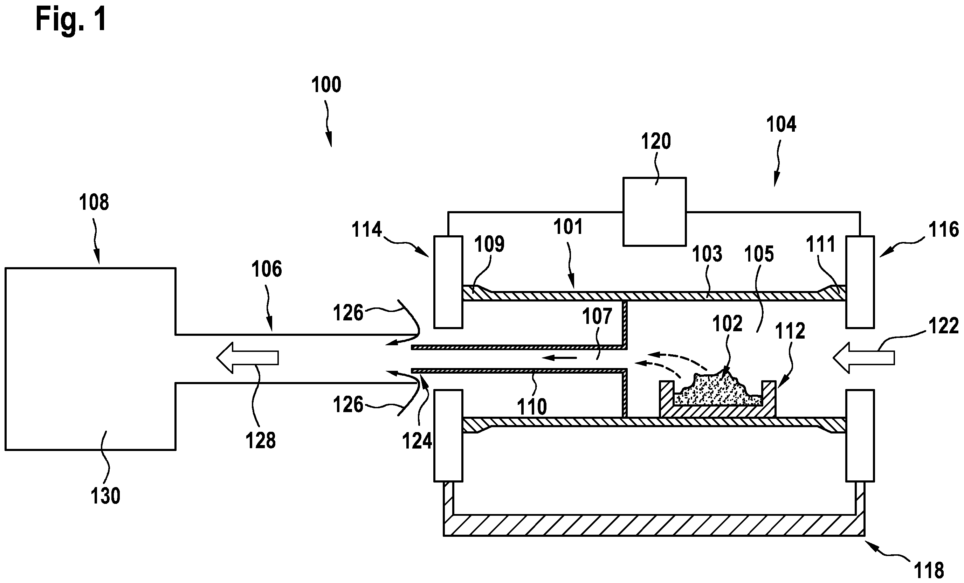

Fig. 1 zeigt eine Analysevorrichtung 100, mithilfe derer Fremdstoffgehalte in einer Probe 102 analysiert werden können. Die Analysevorrichtung 100 umfasst einen Heizofen 104, eine Verbindungsleitung 106 sowie ein Spektrometer 108.

In dem Heizofen 104 ist bei dem in Fig. 1 dargestellten Beispiel eine herkömmliche Heizkammer 101 aufgenommen. Die Heizkammer 101 weist eine Hohlzylinder-förmige Wandung 103 auf. In einer vorderen Hälfte umgibt die Wandung 103 einen Probenaufnahmebereich 105. In dem Probenaufnahmebereich 105 kann ein Probenschiffchen 112 aufgenommen werden, in dem sich die Probe 102 befindet. In einer hinteren Hälfte umgibt die Wandung 103 eine Düse 110 mit einem darin aufgenommenen Düsenbereich 107. Ferner weist die Heizkammer 101 an ihrem hinteren Ende und an ihrem vorderen Ende jeweils Elektroanschlussbereiche 109, 111 auf. Die beiden Elektroanschlussbereiche 109, 111 werden von Stirnflächen der an ihren Enden verdickten rohrförmigen Wandung 103 gebildet.

Die Heizkammer 101 ist in dem Heizofen 104 derart aufgenommen und gehalten, dass die Wandung 103 zwischen zwei jeweils Kreisringscheibenförmigen elektrischen Kontakten 114, 116 eingespannt ist und von diesen sowohl mechanisch gehalten wird als auch an den Elektroanschlussbereichen 109, 111 elektrisch kontaktiert wird. Die elektrischen Kontakte 114, 116 sind wiederum von einer mechanischen Halterung 118 gehalten, die somit indirekt auch die Heizkammer 101 hält. Ferner sind die elektrischen Kontakte 114, 116 mit einer Stromquelle 120 verbunden, über die ein elektrischer Strom durch die elektrisch leitfähige Wandung 103 der Heizkammer 101 bewirkt werden kann.

Um Fremdstoffgehalte in einer Probe 102, wie beispielsweise einer Graphitprobe, zu analysieren, wird die Probe 102 auf dem Schiffchen 112 in den Probenaufnahmebereich 105 der Heizkammer 101 eingebracht. Dann wird die Heizkammer 101 aufgeheizt, indem ein elektrischer Strom durch ihre elektrisch leitfähige Wandung 103 geleitet wird und dort aufgrund elektrischer Widerstandsverluste zu einer Wärmeentwicklung führt, die unter anderem den Probenaufnahmebereich 105 und die darin aufgenommene Probe 102 auf Temperaturen von bis zu 3000°C oder sogar bis zu 3200°C aufheizt.

Bei derart hohen Temperaturen werden aus der Probe 102 Verunreinigungen freigesetzt. Gleichzeitig wird durch den Probenaufnahmebereich 105 ein Trägergas 122, zum Beispiel Argon, zusammen mit Reaktionsgasen geleitet, die mit den Verunreinigungen zu flüchtigen Substanzen reagieren können. Das heiße Trägergas 122 zusammen mit den darin aufgenommenen Verunreinigungsdämpfen, zum Beispiel Fremdatomhalogenid-Dämpfen, strömt dann durch den Düsenbereich 107 der Düse 110. Ein Auslass 124 dieser Düse 110 ragt in Längsrichtung der Heizkammer 101 über die radial weiter außen liegenden Stirnflächen an dem vorderen Elektroanschlussbereich 109 der Heizkammer 101 und auch über den ringförmigen elektrischen Kontakt 114 des Heizofens 104 über und mündet in die Verbindungsleitung 106. Zusammen mit dem heißen Gas aus der Heizkammer 101 wird ein kühleres Hüllgas 126 in die Verbindungsleitung 106 eingeleitet, so dass sich dort ein Aerosol 128 bildet, das dann in eine Analysekammer 130 des Spektrometers 108 eingeleitet werden kann. Dort können die Bestandteile dieses Aerosols einschließlich der darin enthaltenen, ursprünglich aus der Probe 102 stammenden Verunreinigungen analysiert werden.

Beim Einsatz einer beispielhaft in Fig. 1 dargestellten Analysevorrichtung 100 mit herkömmlicher Heizkammer 101 wurden nun einige Defizite bzw. Probleme beobachtet.

Beispielsweise wurde beobachtet, dass bei speziellen Elementen, insbesondere einigen Elementen aus der Gruppe der Karbidbildner wie Bor, Silizium, Vanadium, etc., eine Wiederfindungsrate während eines mit der Analysevorrichtung 100 durchgeführten Analyseverfahrens deutlich geringer sein kann als bei anderen Elementen. Dies kann bei diesen Elementen, insbesondere bei Bor und Silizium, zu einem nicht linearen und nur begrenzt reproduzierbaren Kalibrationsverhalten und in der Folge zu starken Schwankungen bei den Analyseergebnissen führen.

Ferner wurde insbesondere bei den zuvor genannten Elementen der Gruppe der Karbidbildner eine signifikante Tendenz zur Verschleppung von Analyten von einem in einen nachfolgenden Analyselauf beobachtet.

Die genannten Effekte können dazu führen, dass eine analytische Präzision einer auf elektrothermischer Verdampfung beruhenden Probenanalyse im statistischen Sinne im Vergleich zu anderen Analyseverfahren deutlich geringer sein kann, das heißt die Werte für relative Standardabweichungen (RSD) können erheblich über denjenigen von zum Beispiel von Flüssigprobenaufgabeverfahren bekannten Werten liegen.

Ferner wurde beobachtet, dass eine Standzeit oder Lebensdauer herkömmlicher Heizkammern zum Teil deutlich limitiert ist. Es wurde beispielsweise vermehrt ein Versagen der Heizkammer und insbesondere ihrer rohrförmigen Wandung an gleichen Stellen, das heißt etwa im vorderen zweiten Viertel der Wandung, ungefähr im Bereich einer Position des Probenschiffchens 112, beobachtet. Als Versagensursache wurde überwiegend eine signifikante Minderung eines Wandquerschnittes in diesem Bereich mit der Folge eines mechanisch verursachten Bauteilbruchs erkannt.

Es bestand somit ein Bedarf daran, die genannten Defizite und Probleme zu lösen. Hierzu mussten zunächst die Ursachen beispielsweise für die reduzierte Analyseempfindlichkeit insbesondere gegenüber Elementen aus der Gruppe der Karbidbildner, für das Verschleppen von Analyten in nachfolgende Analyseläufe sowie für eine mangelnde analytische Präzision bei Verwendung der ETV-Methode untersucht werden.

Durch mikroskopische Untersuchungen der Düse 110 insbesondere in dem Endbereich der Heizkammer 101 konnten von Art und Konzentration eingesetzter Analyten abhängige Ablagerungen festgestellt werden. Diese Ablagerungen bestanden zu einem überwiegenden Anteil aus den zuvor genannten Elementen der Gruppe der Karbidbildner, für die eine deutlich verminderte Wiederfindungsrate sowie ein Risiko einer Verschleppung in nachfolgende Analyseläufe beobachtet wurden.

Eine anschließende Vermessung eines Temperaturprofils der Heizkammer 101 zeigte deutliche Temperaturinhomogenitäten entlang der Längserstreckung des Bauteils. Insbesondere dort, wo häufig ein mechanisches Versagen der Wandung 103 der Heizkammer 101 beobachtet wurde, wurden zum Teil erhebliche Temperaturüberhöhungen festgestellt, die als Ursache für den vermuteten Materialabtrag und damit für eine Verminderung der Wandstärke der Heizkammer 101 in diesem Abschnitt angesehen werden konnten.

Außerdem ließ sich beobachten, dass im Endbereich der Heizkammer 101 und insbesondere an dem Auslass 124 der Düse 110 oft deutlich geringere Temperaturen vorherrschten als in der übrigen Heizkammer 101. Es wird vermutet, dass diese kühleren Stellen zu einer Analytkondensation bzw. zu unter diesen Temperaturbedingungen begrenzt reversiblen chemischen Reaktionen mit dem Material der Düsenwandung, das heißt insbesondere zu einer Karbidbildung zwischen den Analyten und dem Kohlenstoff der im Regelfall aus Graphit bestehenden Düse 110, führen. Dies kann auch als Ursache für die beobachteten geringen Wiederfindungsraten, Materialverschleppungen sowie die erhöhten Werte der relativen Standardabweichungen angesehen werden.

Als Ergebnis solcher Untersuchungen konnte somit abgeleitet werden, dass mit hoher Wahrscheinlichkeit ein in der Heizkammer 101 vorherrschendes Temperaturprofil maßgeblich für die beobachteten Defizite und Probleme bei der Durchführung von Fremdstoffgehaltanalysen mithilfe herkömmlicher Analysevorrichtungen verantwortlich sein dürften.

Zur Ausräumung dieser Probleme und Defizite wird daher vorgeschlagen, die Temperaturverteilung innerhalb der für die elektrothermische Verdampfung eingesetzten Heizkammer homogener zu gestalten bzw. sogar ein Temperaturmaximum in einen Bereich eines Auslasses aus der Heizkammer, das heißt in den Düsenbereich, zu verlagern, vorzugsweise ohne andere wichtigen Eigenschaften der Heizkammer wie zum Beispiel deren mechanische Stabilität negativ zu beeinflussen.

Hierzu wird vorgeschlagen, die Heizkammer derart zu modifizieren, dass ein durch Anlegen einer elektrischen Spannung an den ersten und zweiten Elektroanschlussbereich bewirkter elektrischer Strom derart durch die Wandung fließt, dass eine durch ihn bewirkte Heizleistung in dem Düsenbereich höher ist als in dem Probenaufnahmebereich.

Während bei der herkömmlichen, in Fig. 1 beispielhaft dargestellten Heizkammer 101 die Düse 110 lediglich indirekt, das heißt beispielsweise durch Wärmestrahlung der sie umgebenden, aktiv geheizten Wandung 103, geheizt wird, soll bei der hierin vorgeschlagenen weiter entwickelten Heizkammer der Düsenbereich gezielt aktiv direkt beheizt werden, indem ein in der Heizkammer bewirkter elektrischer Strom gezielt derart geleitet wird, dass in diesem Düsenbereich eine erhöhte Heizleistung erzielt wird.

Diese im Düsenbereich gezielt bewirkte erhöhte Heizleistung kann dazu führen, dass, im Gegensatz zu der herkömmlichen Heizkammer 101, bei der die Düse 110 lediglich indirekt beheizt wurde und somit im Regelfall später heiß wurde als beispielsweise der Probenaufnahmebereich 105 und auch lediglich geringere Maximaltemperaturen erfahren hat, bei der hierin vorgeschlagenen modifizierten Heizkammer der Düsenbereich vorzugsweise schneller geheizt wird als der Probenaufnahmebereich und vorzugsweise auch auf höhere Temperaturen im Vergleich zu diesem Probenaufnahmebereich geheizt wird.

Hierdurch kann unter anderem vermieden werden, dass zu Beginn eines Analysevorgangs zuerst der Probenaufnahmebereich 105 und die darin aufgenommene Probe 102 auf hohe Temperaturen geheizt werden und sich bereits Verunreinigungen aus der Probe 102 lösen, bevor die Düse 110 auf ausreichend hohe Temperaturen aufgeheizt wurde, so dass sich Analyten teilweise an der noch zu kalten Wandung der Düse 110 ablagern können.

Stattdessen wird am Anfang des Analysevorgangs zuerst der Düsenbereich auf ausreichend hohe Temperaturen gebracht, bevor die im Probenaufnahmebereich 105 aufgenommene Probe 102 ausreichende Temperaturen erreicht, um signifikant Verunreinigungen freizusetzen. Ein Risiko von Ablagerungen der Verunreinigungsdämpfe an der Wandung der Düse kann somit signifikant reduziert werden.

Dies kann unter anderem dazu führen, dass beispielsweise die vorangehend genannten Elemente aus der Gruppe der Karbidbildner in höherem Maße aus der Heizkammer bis hin in das Spektrometer 108 gelangen und dort mit hoher Empfindlichkeit quantitativ analysiert werden können.

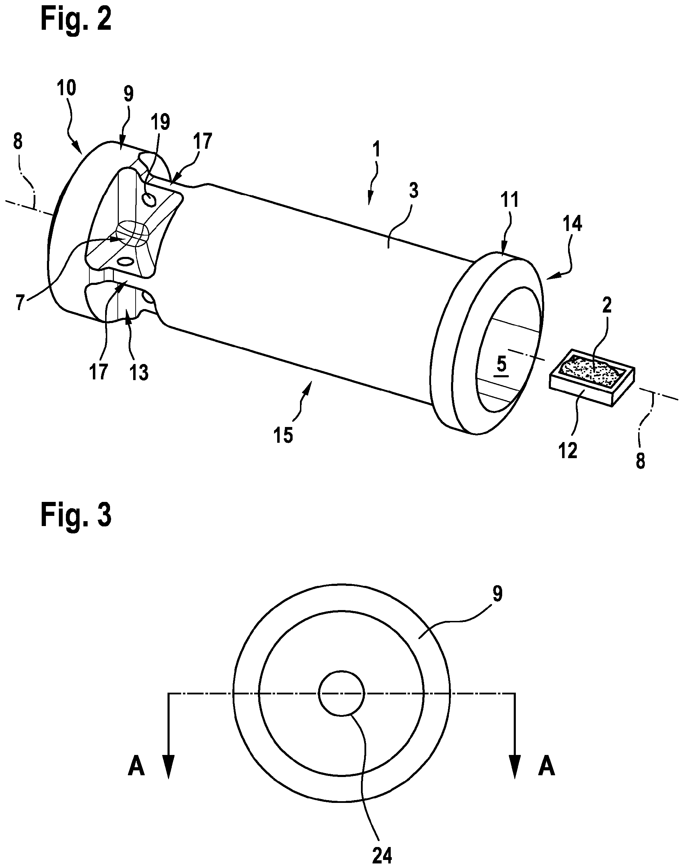

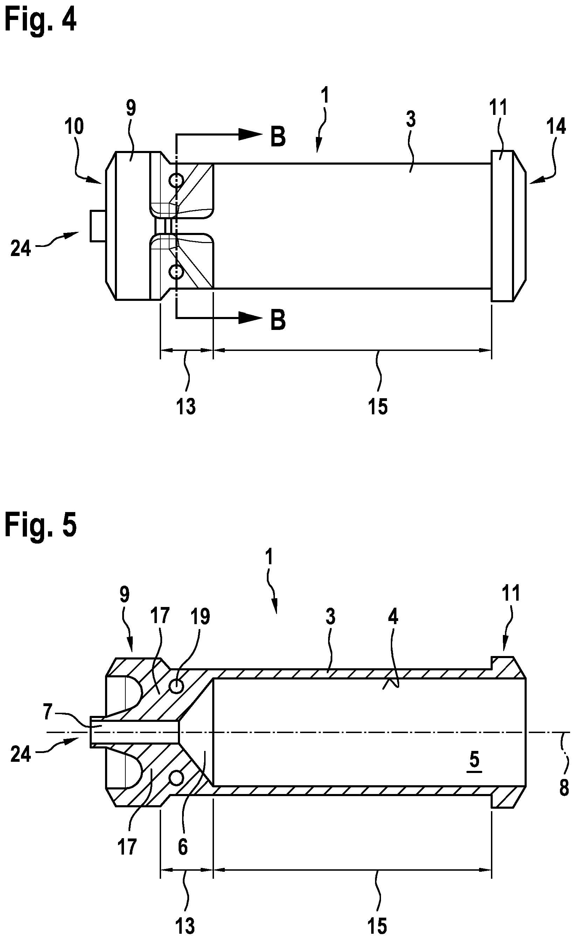

Unter Bezugnahme auf die in den Fig. 2 bis 6 verschiedenartig dargestellte Heizkammer 1 gemäß einer Ausführungsform der vorliegenden Erfindung sollen nun nachfolgend mögliche Merkmale und Modifikationen der hierin vorgestellten Heizkammer 1 im Vergleich zu herkömmlichen Heizkammern 101 näher erläutert werden.

Im Wesentlichen hat die Heizkammer 1, ebenso wie die herkömmliche Heizkammer 101, eine zylindrische Form und wird daher teilweise auch als Ofenrohr bezeichnet. Im dargestellten Beispiel ist die gesamte Heizkammer 1 einstückig aus Graphit hergestellt. Die Heizkammer 1 weist eine elektrisch leitfähige Wandung 3 auf, die in einem vorderen Teil der Heizkammer 1 einen Probenaufnahmebereich 5 umgibt und die in einem hinteren Teil der Heizkammer 1 einen Düsenbereich 7 umgibt. Der Probenaufnahmebereich 5 und der Düsenbereich 7 sind somit vorzugsweise zylindrische Hohlräume, die innerhalb der Wandung 3 der Heizkammer 1 aufgenommen und von dieser in radialer Richtung begrenzt sind, ineinander übergehen und nach außen hin an ihren Stirnflächen offen in Form eines Einlasses bzw. eines Auslasses sind. Der Probenaufnahmebereich 5 mündet dabei über einen konischen, trichterartigen Zwischenbereich 6 in den Düsenbereich 7 und ist somit mit diesem in Fluidkommunikation verbunden, so dass in dem Probenaufnahmebereich 5 entstehende oder strömende Gase in den Düsenbereich 7 strömen können. Der Probenaufnahmebereich 5 und der Düsenbereich 7 sind somit entlang einer zentral verlaufenden Längsachse 8 hintereinander angeordnet. Der Düsenbereich 7 weist hierbei eine wesentlich geringere Querschnittsfläche auf als der Probenaufnahmebereich 5.

Im dargestellten Beispiel sind sowohl der Probenaufnahmebereich 5 als auch der Düsenbereich 7 bezogen auf die Längsachse 8 rotationssymmetrisch ausgebildet, das heißt, sie weisen eine im Wesentlichen zylindrische Geometrie auf, bei der eine zylinderförmige Mantelinnenoberfläche 4 der Wandung 3 jeweils das Volumen des Probenaufnahmebereichs 5 bzw. des Düsenbereichs 7 seitlich umgibt. Auch der trichterartige Zwischenbereich 6 ist rotationssymmetrisch ausgeführt. Zu einer vorderen Stirnfläche 14 hin ist der Probenaufnahmebereich 5 offen, so dass eine Probe 2 mitsamt einem sie haltenden Probenschiffchen 12 in den Probenaufnahmebereich 5 eingebracht werden kann. Der Düsenbereich 7 ist an einer Stirnfläche 10 nach hinten offen, so dass Gas aus ihm austreten kann.

Außerdem steht der Düsenbereich 7 nach hinten über in axialer Richtung weiter außen liegende Bereiche der hinteren Stirnfläche 10 der Heizkammer 1 nach hinten über, so dass ein Düsenauslass 24 beispielsweise in eine sich in Längserstreckung daran anschließende Verbindungsleitung 106 erstrecken kann. Aus dem Düsenauslass 24 austretendes Gas kann somit von einem in der Verbindungsleitung 106 fließenden Hüllgasstrom mitgerissen werden.

An entgegengesetzten Enden der Heizkammer 1 sind jeweils ein erster und ein zweiter Elektroanschlussbereich 9, 11 vorgesehen. Diese Elektroanschlussbereiche werden durch lokale Verdickungen nahe radial außen liegenden Bereichen der Stirnflächen der Wandung 3 gebildet. Die Elektroanschlussbereiche 9, 11 stehen somit in elektrischer Verbindung mit den restlichen Bereichen der Wandung 3, so dass bei Anlegen einer elektrischen Spannung an diese beiden Elektroanschlussbereiche 9, 11 ein elektrischer Strom innerhalb der Wandung 3 bewirkt wird. Aufgrund elektrischer Widerstände in der Wandung 3 und dadurch hervorgerufener elektrischer Leitungsverluste erhitzt sich dabei die Wandung 3 erheblich.

Um nun zu erreichen, dass sich im Düsenbereich 7 eine vorzugsweise höhere Heizleistung einstellt als im Probenaufnahmebereich 5, wird die Heizkammer 1 vorzugsweise derart ausgestaltet, dass der erste und der zweite Elektroanschlussbereich 9, 11 in radialer Richtung entfernter zu der Längsachse 8 angeordnet sind als ein den Düsenbereich 7 umgebender Teil der Wandung 3. Dabei ist die Heizkammer 1 vorzugsweise derart ausgestaltet, dass der in der Wandung 3 bewirkte Strom zwischen dem ersten und dem zweiten Elektroanschluss 9, 11 vorzugsweise überwiegend nach radial innen hin zu dem den Düsenbereich 7 umgebenden Teil der Wandung 3 geleitet wird und dort, konzentriert auf den Düsenbereich 7, eine erhöhte Heizleistung entfaltet.

Ergänzend kann optional eine Querschnittsfläche der Wandung 3 in den Düsenbereich 7 umgebenden Abschnitten kleiner sein als in anderen Abschnitten, insbesondere als in der den Probenausnahmebereich 5 umgebenden Abschnitten, sodass lokal angrenzend an den Düsenbereich eine höhere elektrische Stromdichte und damit eine höhere Heizleistung bewirkt werden.

Um ein solches gezieltes Umleiten des zum Heizen eingesetzten elektrischen Stroms hin zum radial weiter innen befindlichen Düsenbereich 7 bewirken zu können, ist an der Heizkammer 1 ein verengter Teilbereich 13 vorgesehen, in dem die Wandung 3 den Düsenbereich 7 umgibt und der im Vergleich zu Bereichen 15, in denen die Wandung 3 den Probenaufnahmebereich 5 umgibt, eine verengte Querschnittsgeometrie aufweist. Mit anderen Worten ist die ansonsten rohrförmige, zylinderartige Struktur der Heizkammer 1 im hinteren Bereich angrenzend an den Düsenbereich 7 lokal "eingeschnürt", das heißt auf einen kleineren Querschnitt reduziert. Ein an dem vorderen Elektroanschlussbereich 9 eingespeister elektrischer Strom muss somit in diesem verengten Teilbereich 13 zunächst hin zu dem radial innen liegenden Düsenbereich 7 strömen und dort durch einen kleinen Querschnitt fließen, so dass sich lokal eine hohe elektrische Stromdichte einstellt und somit eine starke Heizleistung bewirkt wird. Erst danach kann der elektrische Strom sich wieder nach radial weiter außen bewegen und dort durch die Wandung 3 im Teilbereich 15 fließen, wobei eine Stromdichte geringer und somit eine Heizleistung in diesem Bereich 15 angrenzend an den Probenaufnahmebereich 5 verringert ist.

Um die Heizkammer 1 trotz der hierin vorgeschlagenen lokalen Verengung im verengten Teilbereich 13 mechanisch ausreichend stabil gestalten zu können, sind in dem verengten Teilbereich 13 einige Stegbereiche 17 vorgesehen. Diese Stegbereiche 17 verlaufen parallel zur Längsachse 8 und überbrücken den verengten Teilbereich 13 lokal, um eine mechanisch belastbare lineare Verbindung zwischen den entgegengesetzten Enden der Heizkammer 1 zu bilden.

Wenn die Heizkammer 1 beispielsweise wie in Fig. 1 dargestellt zwischen die elektrischen Kontakte 114, 116 mechanisch eingespannt wird und somit in einer Richtung parallel zu der Längsachse 8 mechanisch belastet wird, können diese Stegbereiche 17 die dabei zwischen den Elektroanschlussbereichen 9, 11 wirkenden mechanischen Kräfte weiterleiten, so dass diese Kräfte nicht eine mechanische Integrität der Heizkammer 1, insbesondere in dem verengten Teilbereich 13, gefährden.

Bei der in den Fig. 2 bis 6 ausgeführten Ausführungsform sind vier Stegbereiche 17 dargestellt, welche äquidistant entlang des Umfangs des verengten Teilbereichs 13 verteilt sind. Ferner sind in den Stegbereichen 17 Ausnehmungen 19 vorgesehen, welche derart ausgestaltet sind, dass einerseits ein elektrischer Strom möglichst weitgehend hin zu dem radial innen befindlichen Düsenbereich 7 geleitet wird, andererseits eine mechanische Stabilität der Stegbereiche 17 gewahrt bleibt.

Selbstverständlich kann zum Erreichen der gewünschten Funktionalität, nämlich den Heizstrom in einem hinteren Bereich der Heizkammer 1 gezielt nach radial nach innen hin zu dem Düsenbereich 7 zu leiten, eine geometrische Ausgestaltung der Heizkammer 1 auch in anderer Weise durchgeführt werden. Beispielsweise kann die geometrische Ausgestaltung des verengten Teilbereichs 13, eine Anzahl von in dem verengten Teilbereich 13 vorgesehener Stegbereiche 17 und/oder eine geometrische Ausgestaltung dieser Stegbereiche 17 und etwaig darin ausgebildeter Ausnehmungen 19 variiert werden.

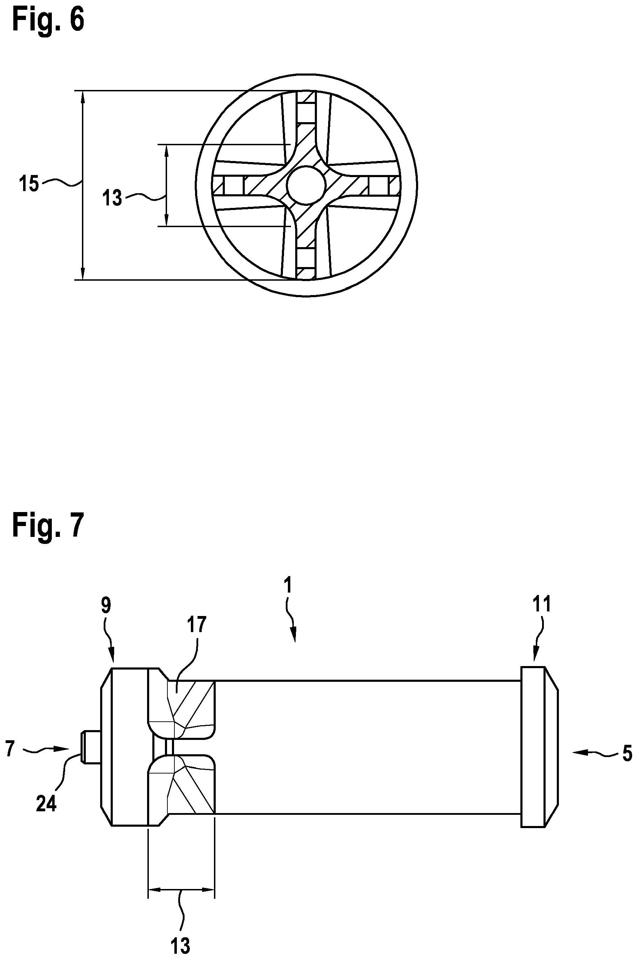

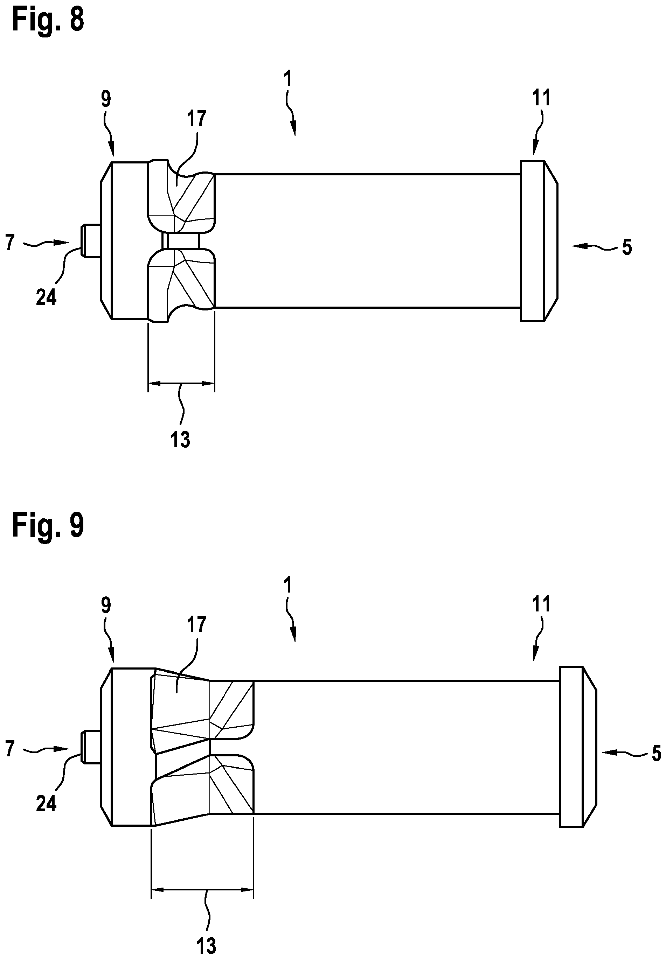

Fig. 7 zeigt beispielsweise eine Heizkammer 1 mit als einfache Rippen ausgebildeten Stegen 17 ohne Ausnehmungen. Fig. 8 zeigt eine Heizkammer 1 mit konisch ausgeführten Stegen 17 bzw. zusätzlich eingefügten Einschnürungen, bei denen eine Stegbreite nach außen hin zu- oder abnimmt. Fig. 9 zeigt eine Heizkammer 1 mit in axialer Richtung schräg angeordneten Stegen 17. Auch nicht-lineare Stege, zum Beispiel in Bogenform, sind vorstellbar. Prinzipiell kann eine Heizkammer 1 ganz ohne Stegbereiche vorgesehen sein, sofern insbesondere im verengten Teilbereich in anderer geeigneter Weise für eine ausreichende mechanische Stabilität gesorgt ist.

Ein mit der hierin vorgeschlagenen modifizierten Heizkammer 1 versehener Heizofen bzw. Analysevorrichtung kann prinzipiell einen gleichen oder analogen Aufbau aufweisen, wie bei der in Fig. 1 gezeigten herkömmlichen Analysevorrichtung.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Heizkammer
- 2: Probe
- 3: Wandung
- 4: Mantelinnenoberfläche
- 5: Probenaufnahmebereich
- 6: trichterartiger Zwischenbereich
- 7: Düsenbereich
- 8: Längsachse
- 9: erster Elektroanschlussbereich
- 10: hintere Stirnfläche
- 11: zweiter Elektroanschlussbereich
- 12: Probenschiffchen
- 13: verengter Teilbereich
- 14: vordere Stirnfläche
- 15: nicht-verengter Teilbereich
- 17: Stegbereich
- 19: Ausnehmung
- 24: Düsenauslass
- 100: Analysevorrichtung
- 101: Heizkammer
- 102: Probe
- 103: Wandung
- 104: Heizofen
- 105: Probenaufnahmebereich
- 106: Verbindungsleitung
- 107: Düsenbereich
- 108: Spektrometer
- 109: erster Elektroanschlussbereich
- 110: Düse
- 111: zweiter Elektroanschlussbereich
- 112: Probenschiffchen
- 114: erster elektrischer Kontakt
- 116: zweiter elektrischer Kontakt
- 118: mechanische Halterung
- 120: Stromquelle
- 122: Trägergas
- 124: Düsenauslass
- 126: Hüllgas
- 128: Aerosol
- 130: Analysekammer

## Patentansprüche

1. Heizkammer (1) für einen Heizofen (104), aufweisend:
eine elektrisch leitfähige Wandung (3),
einen Probenaufnahmebereich (5),
einen Düsenbereich (7),
einen ersten Elektroanschlussbereich (9) und
einen zweiten Elektroanschlussbereich (11),
wobei der Probenaufnahmebereich (5) und der Düsenbereich (7) jeweils von der Wandung (3) umgeben sind,
wobei der Probenaufnahmebereich (5) und der Düsenbereich (7) entlang einer zentral verlaufenden Längsachse (8) hintereinander angeordnet und in Fluidkommunikation miteinander ausgebildet sind und der Probenaufnahmebereich (5) eine größere Querschnittsfläche aufweist als der Düsenbereich (7),
wobei der erste und der zweite Elektroanschlussbereich (9,11) bezogen auf die Längsachse (8) der Heizkammer (1) angrenzend an entgegengesetzte Enden der Heizkammer (1) angeordnet sind und elektrisch mit der Wandung (3) verbunden sind, **dadurch gekennzeichnet, dass** die Heizkammer (1) derart ausgebildet ist, dass ein durch Anlegen einer elektrischen Spannung an den ersten und zweiten Elektroanschlussbereich (9,11) bewirkter elektrischer Strom derart durch die Wandung (3) fließt, dass eine durch ihn bewirkte Heizleistung in dem Düsenbereich (7) gleich oder höher ist als in dem Probenaufnahmebereich (5),
wobei der erste und der zweite Elektroanschlussbereich (9,11) in radialer Richtung entfernter zu der Längsachse (8) angeordnet sind als ein den Düsenbereich (7) umgebender Teil der Wandung (3) und
wobei die Heizkammer (1) derart ausgebildet ist, dass der bewirkte Strom zwischen dem ersten und dem zweiten Elektroanschlussbereich (9,11) überwiegend nach radial innen hin zu dem den Düsenbereich (7) umgebenden Teil der Wandung (3) geleitet wird.

2. Heizkammer nach Anspruch 1, wobei die Wandung (3) in einem verengten Teilbereich (13), in dem die Wandung (3) den Düsenbereich (7) umgibt, im Vergleich zu Bereichen (15), in denen die Wandung (3) den Probenaufnahmebereich (5) umgibt, eine verengte Querschnittsgeometrie aufweist.

3. Heizkammer nach Anspruch 2, wobei die Heizkammer (1) in dem verengten Teilbereich (13) Stegbereiche (17) aufweist, welche den verengten Teilbereich (13) überbrücken, um eine mechanisch belastbare lineare Verbindung zwischen den entgegengesetzten Enden der Heizkammer (1) zu bilden.

4. Heizkammer nach Anspruch 2 oder 3, wobei die Heizkammer (1) mehrere äquidistant entlang eines Umfangs des verengten Teilbereichs verteilte Stegbereiche (17) aufweist.

5. Heizkammer nach einem der vorangehenden Ansprüche, wobei der erste und der zweite Elektroanschlussbereich (9, 11) durch Stirnflächen der Wandung (3) an den entgegengesetzten Enden der Heizkammer (1) gebildet werden und wobei der erste und der zweite Elektroanschlussbereich (9, 11) eine im Wesentlichen gleiche Querschnittsgeometrie aufweisen.

6. Heizkammer nach einem der vorangehenden Ansprüche, wobei der Probenaufnahmebereich (5) und/oder der Düsenbereich (7) bezogen auf die Längsachse (8) achssymmetrisch, vorzugsweise rotationssymmetrisch, ausgebildet sind.

7. Heizkammer nach einem der vorangehenden Ansprüche, wobei die Wandung (3) angrenzend an den Probenaufnahmebereich und/oder den Düsenbereich bezogen auf die Längsachse (8) achssymmetrisch, vorzugsweise rotationssymmetrisch, ausgebildet ist.

8. Heizkammer nach einem der vorangehenden Ansprüche, wobei der Düsenbereich (7) mit einem radial weit innen liegenden Düsenauslass (24) in axialer Richtung über radial weiter außen liegende Stirnflächen der Wandung (3) überragt.

9. Heizkammer nach einem der vorangehenden Ansprüche, wobei die Wandung (3) aus Graphit besteht.

10. Heizkammer nach einem der vorangehenden Ansprüche, wobei die gesamte Heizkammer (1) aus Graphit besteht.

11. Heizkammer nach einem der vorangehenden Ansprüche, wobei die gesamte Heizkammer (1) einstückig ist.

12. Heizofen (104), aufweisend:
eine mechanische Halterung (118),
einen ersten und einen zweiten elektrischen Kontakt (114, 116), und
eine Heizkammer (1) gemäß einem der Ansprüche 1 bis 11,
wobei die Heizkammer (1) in der Halterung (118) gehalten ist und der erste Elektroanschlussbereich (9) mit dem ersten elektrischen Kontakt (114) und der zweite Elektroanschlussbereich (11) mit dem zweiten Kontakt (116) kontaktiert sind.

13. Analysevorrichtung (100) zum Analysieren von Fremdstoffgehalten in Proben (102), aufweisend:
einen Heizofen (1) gemäß Anspruch 12,
eine Verbindungsleitung (106), und
ein Spektrometer (108),
wobei der Düsenbereich (7) der Heizkammer (1) des Heizofens (104) derart in die Verbindungsleitung (106) mündet und die Verbindungsleitung (106) derart in das Spektrometer (108) mündet, dass im Probenaufnahmebereich (5) der Heizkammer (1) gebildetes Gas über den Düsenbereich (7) und die Verbindungsleitung (106) in das Spektrometer geleitet werden kann.

14. Verfahren zum Analysieren von Fremdstoffgehalten in Proben (102), wobei die Proben (102) in einem Probenaufnahmebereich (5) einer Heizkammer (1) gemäß einem der Ansprüche 1 bis 11 aufgeheizt werden, um darin enthaltene Fremdstoffgehalte freizusetzen.

## Claims

1. Heating chamber (1) for a heating furnace (104), comprising:
an electrically-conductive wall (3);
a sample reception area (5);
a nozzle area (7);
a first electrical connection area (9); and
a second electrical connection area (11),
wherein the sample reception area (5) and the nozzle area (7) are each surrounded by the wall (3),
wherein the sample reception area (5) and the nozzle area (7) are arranged one behind the other along a longitudinal axis (8) that extends centrally and said sample reception area and nozzle area are embodied in fluid communication with one other, and the sample reception area (5) comprises a larger cross-sectional area than the nozzle area (7),
wherein the first and the second electrical connection area (9, 11) are arranged adjacent to opposite ends of the heating chamber (1) relative to the longitudinal axis (8) of the heating chamber (1) and are electrically connected to the wall (3), **characterized in that**
the heating chamber (1) is embodied in such a manner that an electric current that is produced by means of applying an electric voltage to the first and second electrical connection area (9, 11) flows through the wall (3) in such a manner that a heating capacity that is produced by said electrical current is equal to or greater in the nozzle area (7) than in the sample reception area (5),
wherein the first and the second electrical connection area (9, 11) are arranged in the radial direction more remote from the longitudinal axis (8) than a part of the wall (3) that surrounds the nozzle area (7), and
wherein the heating chamber (1) is embodied in such a manner that the current that is produced between the first and the second electrical connection area (9, 11) is directed predominantly radially inwards towards the part of the wall (3) that surrounds the nozzle area (7).

2. Heating chamber according to claim 1, wherein in comparison with areas (15) in which the wall (3) surrounds the sample reception area (5) the wall (3) comprises a narrowed cross-section geometry in a constricted section (13) in which the wall (3) surrounds the nozzle area (7).

3. Heating chamber according to claim 2, wherein the heating chamber (1) comprises web areas (17) in the constricted section (13), which bridge the constricted section (13) in order to form a mechanically loadable linear connection between the opposite ends of the heating chamber (1).

4. Heating chamber according to claim 2 or 3, wherein the heating chamber (1) comprises a plurality of web areas (17) that are distributed equidistantly along a circumference of the constricted section.

5. Heating chamber according to any one of the preceding claims, wherein the first and the second electrical connection area (9, 11) are formed by means of end faces of the wall (3) at the opposite ends of the heating chamber (1), and wherein the first and the second electrical connection area (9, 11) comprise a substantially identical cross-section geometry.

6. Heating chamber according to any one of the preceding claims, wherein the sample reception area (5) and/or the nozzle area (7) are embodied in an axially symmetrical manner, preferably a rotationally symmetrical manner, relative to the longitudinal axis (8).

7. Heating chamber according to any one of the preceding claims, wherein the wall (3) adjacent to the sample reception area and/or the nozzle area is embodied in an axially symmetrical manner, preferably a rotationally symmetrical manner, relative to the longitudinal axis (8).

8. Heating chamber according to any one of the preceding claims, wherein the nozzle area (7) has a nozzle outlet (24), which lies radially far inside and protrudes in the axial direction beyond end faces of the wall (3) that lie radially further outside.

9. Heating chamber according to any one of the preceding claims, wherein the wall (3) is embodied from graphite.

10. Heating chamber according to any one of the preceding claims, wherein the entire heating chamber (1) is embodied from graphite.

11. Heating chamber according to any one of the preceding claims, wherein the entire heating chamber (1) is a single part.

12. Heating furnace (104), comprising:
a mechanical mount (118);
a first and a second electrical contact (114, 116); and
a heating chamber (1) in accordance with any one of claims 1 to 11,
wherein the heating chamber (1) is held in the mount (118) and the first electrical connection area (9) is contacted with the first electrical contact (114) and the second electrical connection area (11) is contacted with the second electrical contact (116).

13. Analysis device (100) for analysing foreign matter contents in samples (102), having:
a heating furnace (1) in accordance with claim 12,
a connecting tube (106); and
a spectrometer (108),
wherein the nozzle area (7) of the heating chamber (1) of the heating furnace (104) issues into the connecting tube (106) in such a manner and the connecting tube (106) issues into the spectrometer (108) in such a manner that gas that is formed in the sample reception area (5) of the heating chamber (1) may be guided into the spectrometer via the nozzle area (7) and the connecting tube (106).

14. Method for analysing foreign matter contents in samples (102), wherein the samples (102) are heated in a sample reception area (5) of a heating chamber (1) in accordance with any one of claims 1 to 11 in order to release foreign matter contents that are contained therein.

## Revendications

1. Chambre de chauffe (1) pour un four de chauffage (104), comportant :
une paroi (3) électriquement conductrice,
une zone de réception d'échantillon (5),
une zone de buse (7),
une première zone de connexion électrique (9) et
une deuxième zone de connexion électrique (11),
dans laquelle la zone de réception d'échantillon (5) et la zone de buse (7) sont respectivement entourées par la paroi (3),
dans laquelle la zone de réception d'échantillon (5) et la zone de buse (7) sont agencées l'une derrière l'autre le long d'un axe longitudinal (8) disposé au centre et sont réalisées en communication fluidique l'une avec l'autre et
la zone de réception d'échantillon (5) présente une surface de section supérieure à celle de la zone de buse (7),
dans laquelle la première et la deuxième zone de connexion électrique (9, 11) sont agencées, par rapport à l'axe longitudinal (8) de la chambre de chauffe (1), comme adjacentes à des extrémités opposées de la chambre de chauffe (1) et sont reliées électriquement à la paroi (3),
**caractérisée en ce que** la chambre de chauffe (1) est réalisée de telle façon qu'un courant électrique induit par application d'une tension électrique à la première et à la deuxième zone de connexion électrique (9, 11) passe à travers la paroi (3) de sorte qu'une puissance de chauffage induite par celui-ci, dans la zone de buse (7) est supérieure ou égale à celle dans la zone de réception d'échantillon (5),
dans laquelle la première et la deuxième zone de connexion électrique (9, 11) sont agencées comme plus éloignées de l'axe longitudinal (8) dans la direction radiale qu'une partie de la paroi (3) entourant la zone de buse (7) et
dans laquelle la chambre de chauffe (1) est réalisée de telle sorte que le courant induit entre la première et la deuxième zone de connexion électrique (9, 11) est conduit en majorité radialement vers l'intérieur vers la partie de la paroi (3) entourant la zone de buse (7).

2. Chambre de chauffe selon la revendication 1, dans laquelle la paroi (3) présente, dans une zone partielle rétrécie (13) dans laquelle la paroi (3) entoure la zone de buse (7), une géométrie de section rétrécie en comparaison avec des zones (15) dans lesquelles la paroi (3) entoure la zone de réception d'échantillon (5).

3. Chambre de chauffe selon la revendication 2, dans laquelle la chambre de chauffe (1) présente dans la zone partielle rétrécie (13) des zones de bride (17), lesquelles pontent la zone partielle rétrécie (13) afin de former une liaison linéaire mécaniquement sollicitable entre les extrémités opposées de la chambre de chauffe (1).

4. Chambre de chauffe selon la revendication 2 ou 3, dans laquelle la chambre de chauffe (1) présente plusieurs zones de bride (17) distribuées de manière équidistante le long d'un pourtour de la zone partielle rétrécie.

5. Chambre de chauffe selon l'une des revendications précédentes, dans laquelle la première et la deuxième zone de connexion électrique (9, 11) sont formées par des surfaces frontales de la paroi (3) aux extrémités opposées de la chambre de chauffe (1) et dans laquelle la première et la deuxième zone de connexion électrique (9, 11) présentent une géométrie de section sensiblement identique.

6. Chambre de chauffe selon l'une des revendications précédentes, dans laquelle la zone de réception d'échantillon (5) et/ou la zone de buse (7) sont réalisées comme axialement symétriques par rapport à l'axe longitudinal (8), en particulier à symétrie de révolution.

7. Chambre de chauffe selon l'une des revendications précédentes, dans laquelle la paroi (3) adjacente à la zone de réception d'échantillon et/ou à la zone de buse est réalisée comme axialement symétriques par rapport à l'axe longitudinal (8), en particulier à symétrie de révolution.

8. Chambre de chauffe selon l'une des revendications précédentes, dans laquelle la zone de buse (7) dépasse, avec une sortie de buse (24) située radialement plus à l'intérieur, dans la direction axiale des surfaces frontales (3) situées radialement plus à l'extérieur.

9. Chambre de chauffe selon l'une des revendications précédentes, dans laquelle la paroi (3) est constituée de graphite.

10. Chambre de chauffe selon l'une des revendications précédentes, dans laquelle toute la chambre de chauffe (1) est constituée de graphite.

11. Chambre de chauffe selon l'une des revendications précédentes, dans laquelle toute la chambre de chauffe (1) est d'une pièce.

12. Four de chauffage (104), comportant :
un support mécanique (118),
un premier et un deuxième contact électrique (114, 116) et
une chambre de chauffe (1) selon l'une des revendications 1 à 11,
dans lequel la chambre de chauffe (1) est maintenue dans le support (118) et la première zone de connexion électrique (9) est en contact avec le premier contact électrique (114) et la deuxième zone de connexion électrique (11) est en contact avec le deuxième contact électrique (116).

13. Dispositif d'analyse (100) permettant l'analyse de teneurs en corps étrangers dans des échantillons (102), comportant :
un four de chauffage (1) selon la revendication 12,
une conduite de liaison (106), et
un spectromètre (108),
dans lequel la zone de buse (7) de la chambre de chauffe (1) du four de chauffage (104) débouche dans la conduite de liaison (106) et la conduite de liaison (106) débouche dans le spectromètre (108) de telle sorte que du gaz formé dans la zone de réception d'échantillon (5) de la chambre de chauffe (1) peut être conduit dans le spectromètre à travers la zone de buse (7) et la conduite de liaison (106).

14. Procédé destiné à l'analyse de teneurs en corps étrangers dans des échantillons (102),
dans lequel les échantillons (102) sont chauffés dans une zone de réception d'échantillon (5) d'une chambre de chauffe (1) selon l'une des revendications 1 à 11, afin de dégager les teneurs en corps étrangers y contenues.
